# EUROPÄISCHE PATENTSCHRIFT

(11) **EP 1 777 138 B1**
(45) Veröffentlichungstag und Bekanntmachung des Hinweises auf die Patenterteilung: **31.03.2010**
(21) Anmeldenummer: 06122575.1
(22) Anmeldetag: 19.10.2006
(51) Int. Cl.: B62D 3/12, F16F 3/087, F16F 1/40, B62D 7/22

(54) **Lenkeinrichtung für ein Kraftfahrzeug**
Steering device for a motor vehicle
Dispositif de direction pour un véhicule automotrice

(30) Priorität: 24.10.2005 DE 102005050798
(43) Veröffentlichungstag der Anmeldung: 25.04.2007
(73) Patentinhaber: ZF Lenksysteme GmbH, 73527 Schwäbisch Gmünd (DE)
(72) Erfinder: Bareis, Helmut, 73569 Eschach (DE); Budaker, Martin, 73540 Heubach (DE); Jüschke, Michael, 73565 Spraitbach (DE)

(56) Entgegenhaltungen:
- EP-A1- 1 500 573
- EP-A2- 0 812 755
- JP-A- 8 133 102

## Beschreibung

Die Erfindung betrifft eine Lenkeinrichtung für ein Kraftfahrzeug, mit einer Lenkstange, welche beidseits mit lenkbaren Rädern verbunden ist gemäß dem Oberbegriff von Anspruch 1.

Eine gattungsgemäße Lenkeinrichtung ist aus der WO 03/029067 A1 bekannt.

Bei Zahnstangen-Lenkeinrichtungen ist es allgemein bekannt, dass die Lenkbegrenzung durch das Anschlagen des Radträgers (Achsschenkel) an dem Lenker oder dem Verlegen der Begrenzung in das Lenkgetriebe erfolgt. Diese Lenkbegrenzungssysteme weisen störende Anschlaggeräusche auf.

Aus der DE 34 29 597 A1 ist eine Zahnstangen-Lenkeinrichtung bekannt, die Anschlagglieder aufweist, die an der Zahnstange befestigt sind, um die Axialbewegung der Zahnstange gegen das Gehäuse zu begrenzen. Ein Teil der Berührungsflächen ist mit elastisch nachgiebigen Teilen so ausgestattet, dass zunächst ein Auftreffen auf die elastisch nachgiebigen Teile erfolgt, um so den Auftreffstoß zu absorbieren, bevor eine Berührung zwischen den Metallen erfolgt.

Insbesondere bei elektrisch unterstützten Lenkeinrichtungen, bei welchen die drehende Ausgangsbewegung eines Elektromotors dazu benutzt wird, die manuelle Kraft, die auf die Lenkhandhabe ausgeübt wird, zu unterstützen, reichen aufgrund der Massenträgheit des Elektromotors die Dämpfungskonzepte herkömmlicher Anschlagsysteme nicht aus, um die Anschlaggeräusche zwischen den Anschlagpaaren, zum Beispiel Spurstange und Lenkgetriebegehäuse, zu dämpfen.

Aus der EP 1 500 573 A1 ist eine mittels Elektromotor unterstützte Zahnstangen-Lenkeinrichtung bekannt, die zur Begrenzung der Axialbewegung in beide Lenkrichtungen Anschlagelemente aus einem elastischen Material aufweist.

Zwischen Ausnehmungen der Anschlagelemente und Rücksprüngen des Gehäuses ist jeweils ein zusätzliches ringförmiges Element integriert.

Um eine Beschädigung von Bauteilen am mechanischen Endanschlag zu vermeiden, ist es aus dem allgemeinen Stand der Technik ferner bekannt, die große Masse des schnell drehenden Elektromotors durch eine Rutschkupplung abzufangen.

Aus der gattungsgemäßen Schrift ist eine Zahnstangen-Lenkeinrichtung bekannt, bei welcher sowohl für konventionelle als auch für hilfs- bzw. fremdkraftunterstützte Lenksysteme eine Hubbegrenzung erreicht wird und dabei störende Auflaufgeräusche vermieden werden. Dabei ist ein Anschlagmittel aus elastisch nachgiebigem Material vorgesehen, welches vollständig in zueinander axial bewegbaren, nicht elastischen Teilen des Anschlagmittels eingeklammert ist.

Der vorliegenden Erfindung liegt die Aufgabe zugrunde, eine Lenkeinrichtung für ein Kraftfahrzeug zu schaffen, bei welcher sowohl für konventionelle als auch für hilfs- bzw. fremdkraftunterstützte Lenksysteme eine geräuscharme Begrenzung der Axialbewegung der Lenkstange in beide Lenkrichtungen erreicht wird, wobei die Massenkräfte am Endanschlag auch bei abgeschalteter Elektrik beschädigungsfrei abgebaut werden sollen.

Erfindungsgemäß wird diese Aufgabe durch Anspruch 1 gelöst.

Gemäß der Erfindung ist es vorgesehen, dass ein Anschlagelement am Außendurchmesser beziehungsweise am Außenumfang mit wenigstens einem Rasterelement versehen ist und das Gehäuse entsprechende Rücksprünge zur Aufnahme des Rasterelementes aufweist. Das Anschlagelement kann somit in einfacher Weise an der vorgesehenen Position im Gehäuse positioniert werden. Das wenigstens eine Rasterelement kann beispielsweise als Rasternase ausgebildet sein. Vorgesehen ist dabei, dass über den Außenumfang des Anschlagelementes verteilt mehrere Rasternasen ausgebildet sind. Alternativ dazu kann auch vorgesehen sein, dass das Rasterelement um den Außenumfang des Anschlagelementes umlaufend ausgebildet ist. Auch mehrere umlaufende Rasternasen können vorgesehen sein.

Des Weiteren ist es vorgesehen, dass zwischen den beiden axialen Enden des jeweiligen Anschlagelementes wenigstens ein Stabilisierungselement eingebracht ist, welches das Anschlagelement in jeweils voneinander getrennte Dämpfungsbereiche unterteilt. Dadurch ist es möglich, dass das Anschlagelement ein sehr großes Dämpfungsvolumen aufweist.

Mit diesem können auch große Massenkräfte über einen entsprechenden Dämpferweg abgebaut werden. Im Unterschied zu den aus dem allgemeinen Stand der Technik bekannten Anschlagelementen ist es nunmehr möglich, ein Anschlagelement mit einem elastischen Material mit einer Dicke einzusetzen, durch die eine gute Dämpferkennlinie erreicht werden kann. Das elastische Material kann dabei vorzugsweise ein Elastomer sein.

Das Stabilisierungselement verringert die Einschnürung des Innendurchmessers bzw. eine nach innen gerichtete Ausbeulung des elastischen Materials im Belastungsfall und verhindert somit eine Berührung mit der Lenkstange.

Von Vorteil ist es, wenn das Stabilisierungselement das elastische Material in zwei in axialer Richtung wenigstens annähernd gleich große Dämpfungsbereiche unterteilt. In einfacher Weise kann dies dadurch geschehen, dass das Stabilisierungselement in axialer Richtung betrachtet in der Mitte des Anschlagelementes angeordnet ist.

Möglich ist auch die Anordnung von zwei oder mehreren Stabilisierungselementen, vorzugsweise derart, dass die entstehenden Dämpfungsbereiche jeweils gleich groß sind.

Erfindungsgemäß kann vorgesehen sein, dass das Stabilisierungselement als Metallplatte bzw. Metallring, vorzugsweise als Stahlring ausgebildet ist. Dies hat sich sowohl im Hinblick auf eine optimale Stabilisierung als auch aus Kostengründen als besonders geeignet herausgestellt.

Um Beschädigungen des elastischen Materials zu vermeiden, kann erfindungsgemäß vorgesehen sein, dass wenigstens ein axiales Ende des Anschlagelements mit einem stoßfesten nicht elastischen Material versehen ist. Beispielsweise kann das Anschlagelement an einem einer Anschlagfläche des Gehäuses zugewandten axialen Ende mit einem Metallring versehen sein. Alternativ oder ergänzend dazu kann ferner vorgesehen sein, dass das einer Anschlagfläche eines Spurstangengelenks zugewandte axiale Ende des Anschlagelementes mit einem Metallring versehen ist. Die Metallringe an den axialen Enden der Anschlagelemente können dabei vorzugsweise als Stahlringe ausgebildet sein.

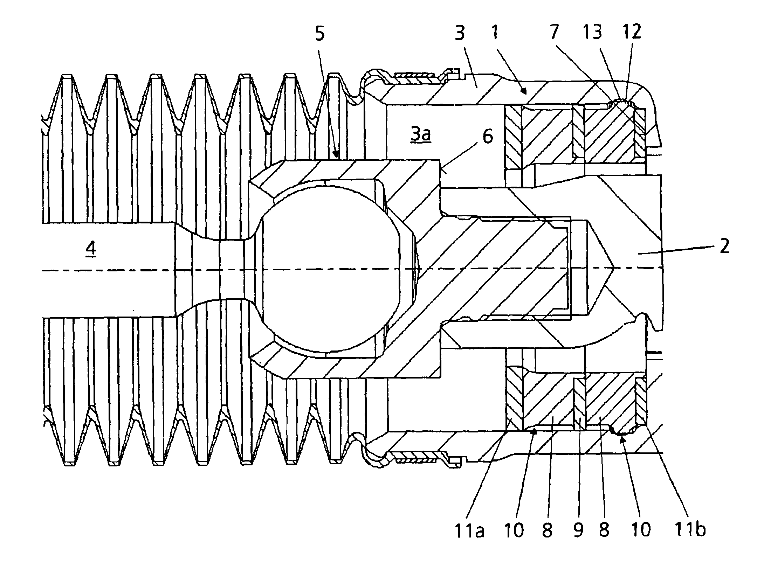

Vorteilhafte Ausgestaltungen und Weiterbildungen ergeben sich aus den weiteren Unteransprüchen. Nachfolgend ist anhand der Zeichnung ein Ausführungsbeispiel der Erfindung prinzipmäßig dargestellt.

Die einzige Figur der Zeichnung zeigt einen Schnitt durch einen Teil eines Lenkgetriebes für ein Kraftfahrzeug.

Hydraulische Hilfskraftlenkungen sowie Servomotoren sind aus dem allgemeinen Stand der Technik hinlänglich bekannt, wozu beispielsweise auf die DE 44 35 848 A1 und die WO 98/22718 verwiesen wird.

Das allgemeine Funktionsprinzip von Anschlagelementen, welche die Axialbewegung einer Lenkstange, beispielsweise einer Zahnstange, in beide Lenkrichtungen begrenzen sollen, ist aus der WO 03/029067 A1 hinlänglich bekannt, weshalb nachfolgend nur auf die für die Erfindung wesentlichen Merkmale näher eingegangen wird.

In der Zeichnung ist ein Ausschnitt einer Zahnstangen-Lenkeinrichtung mit einem erfindungsgemäßen Anschlagelement 1 dargestellt. Auf der anderen Seite der als Zahnstange 2 ausgebildeten Lenkstange ist für den entgegengesetzten Lenkeinschlag ein äquivalentes System angeordnet.

Die Zahnstange 2 erstreckt sich axial beweglich in einem Gehäuse 3, wobei die Axialbewegung in beide Lenkrichtungen durch jeweils ein erfindungsgemäßes Anschlagelement 1 begrenzt wird, welche im Bereich der beiden axialen Enden des Gehäuses 3 im Gehäuseinnenraum 3a positioniert sind (dargestellt ist im Ausführungsbeispiel nur ein axiales Ende des Gehäuses 3).

Über eine nicht dargestellte Lenkhandhabe wird in bekannter Weise eine Lenkbewegung auf die Zahnstange 2 übertragen. Die Übertragung der Lenkbewegung kann dabei beispielsweise über ein Ritzel (nicht dargestellt) erfolgen. Die Lenkbewegung kann hydraulisch oder durch einen Elektromotor und ein Getriebe zur Übertragung der Unterstützungskräfte auf die Zahnstange 2 unterstützt werden. Das erfindungsgemäße Anschlagelement 1 eignet sich in besonderer Weise für den Einsatz bei einer elektromechanischen Lenkung, bei der die vom Fahrer eines Kraftfahrzeugs gewünschte Lenkbewegung durch einen Elektromotor und ein Getriebe unterstützt wird. Besonders geeignet ist das Anschlagelement 1 dabei in Kombination mit einem Kugelumlaufgetriebe, da das Anschlagelement 1 eine Beschädigung desselben zuverlässig verhindert.

Möglich ist auch der Einsatz des erfindungsgemäßen Anschlagelementes 1 bei sogenannten "steer by wire" Lenkeinrichtungen. Für den Einsatz des erfindungsgemäßen Anschlagelementes ist die Art und Weise, wie die Zahnstange 2 in dem Gehäuse 3 zur Auslenkung der lenkbaren Räder bewegt wird, prinzipiell nicht relevant, das Anschlagelement eignet sich jedoch zur Dämpfung hoher Massekräfte in besonderer Weise.

Wie sich aus der Zeichnung ergibt, wird die auf die Zahnstange 2 übertragene Lenkkraft (beidseitig) über Spurstangen 4 auf lenkbaren Räder (nicht dargestellt) übertragen. Ein Gelenk 5, welches die Zahnstange 2 mit der Spurstange 4 verbindet, und das Gehäuse 3 (im Bereich des dem Gelenk 5 zugewandten Zahnstangenendes) bilden Anschlagflächen 6, 7 aus. Zwischen den Anschlagflächen 6, 7 ist das erfindungsgemäße Anschlagelement 1 angeordnet. Im Ausführungsbeispiel liegt bzw. grenzt das Anschlagelement 1 an die Anschlagfläche 7 des Gehäuses 3 an.

Das Anschlagelement 1 ist aus einem elastischen Material 8, im Ausführungsbeispiel einem Elastomer ausgebildet, welches durch ein Stabilisierungselement 9 in zwei Dämpfungsbereiche 10 unterteilt ist. Das Stabilisierungselement 9 ist in axialer Richtung betrachtet in der Mitte des Anschlagelementes 1 angeordnet und teilt das elastische Material 8 in zwei wenigstens annähernd gleich große Dämpfungsbereiche 10. Das Stabilisierungselement 9 ist aus einem nicht elastischen Material bzw. einem Material mit einer geringen Elastizität, im Ausführungsbeispiel aus einer Stahlscheibe bzw. einem Stahlring gebildet.

Hinsichtlich der Herstellung des erfindungsgemäßen Anschlagelementes 1 hat es sich als besonders geeignet herausgestellt, den Stahlring 9 in das elastische Material 8 einzuvulkanisieren. Vorgesehen ist dabei, dass die beiden aus dem elastischen Material 8 gebildeten Dämpfungsbereiche 10 nicht vollständig voneinander getrennt sind, sondern ein ringförmiger Steg am Innendurchmesser des Anschlagelementes bestehen bleibt, der die beiden Dämpfungsbereiche 10 verbindet. Der Stahlring 9 erstreckt sich somit nicht vollständig beginnend vom Außendurchmesser des elastischen Materials 8 durch das elastische Material hindurch.

Alternativ oder ergänzend dazu kann auch vorgesehen sein, dass der Stahlring 9 mit Durchbrüchen, Bohrungen oder dergleichen versehen ist, wodurch die Dämpfungsbereiche 10 miteinander verbunden sind (nicht dargestellt).

Wie aus der Zeichnung ersichtlich ist, ist der Stahlring 9 axial beidseits im wesentlichen von dem elastischen Material 8 umgeben.

An den beiden axialen Enden des Anschlagelementes 1 sind Stahlscheiben beziehungsweise Stahlringe 11a, 11b angeordnet, welche das elastische Material vor Beschädigung schützen sollen.

Das Anschlagelement 1 ist am Außenumfang mit einem umlaufenden Rasterelement, welches als Rasternase 12 ausgebildet ist, versehen. Das Gehäuse 3 weist dabei entsprechende Rücksprünge 13 zur Aufnahme des Rasterelementes 12 auf. Das Rasterelement 12 und die Rücksprünge 13 dienen zur exakten Positionierung des Anschlagelementes 1 im Innenraum des Gehäuses 3.

In Versuchen hat es sich hinsichtlich der gewünschten Dämpferkennlinie als besonders geeignet herausgestellt, wenn die Dämpfungsbereiche 10 jeweils eine axiale Länge von 4 bis 14 Millimeter, vorzugsweise 9 Millimeter aufweisen. Hierbei ist es besonders geeignet, wenn der Stahlring 9 eine axiale Länge von weniger als 3 Millimeter, vorzugsweise 2 Millimeter aufweist. Ebenfalls als vorteilhaft hat es sich herausgestellt, wenn die der Anschlagfläche 6 des Gelenkes 5 zugewandte Stahlscheibe 11a eine Stärke von 2 bis 4, vorzugsweise 3 Millimeter und die der Anschlagfläche 7 des Gehäuses 3 zugewandte Stahlscheibe 11 b eine Stärke von 1 bis 3, vorzugsweise 2 Millimeter aufweist.

Der Einsatz des erfindungsgemäßen Anschlagelementes 1 ist nicht auf die dargestellte Ausführungsform begrenzt, vielmehr kann das erfindungsgemäße Anschlagelement 1 bei einem konstruktiv anderen Aufbau, beispielsweise gemäß der DE 34 29 597 A1 an einer geeigneten anderen Stelle positioniert werden, um die Axialbewegung der Zahnstange 2 im Gehäuse 3 zu begrenzen. Ein Einsatz des erfindungsgemäßen Anschlagelementes 1 in dem Gehäuseinnenraum 3a ist zwar besonders geeignet, auch hierbei sind jedoch andere Ausführungsformen grundsätzlich möglich.

Bezugszeichen
- 1: Anschlagelement
- 2: Zahnstange
- 1.: Gehäuse
- 3a: Gehäuseinnenraum
- 4: Spurstange
- 5: Gelenk
- 6: Anschlagfläche des Gelenks
- 7: Anschlagfläche des Gehäuses
- 8: elastisches Material
- 9: Stabilisierungselement, Stahlring
- 10: Dämpfungsbereich
- 11a: Stahlring
- 11b: Stahlring
- 12: Rasterelement
- 13: Rücksprung

## Patentansprüche

1. Lenkeinrichtung für ein Kraftfahrzeug, mit einer Lenkstange, welche mit lenkbaren Rädern verbunden ist, mit folgenden Merkmalen:
• die Lenkstange ist in einem Gehäuse axial verschieblich angeordnet,
• zur Begrenzung der Axialbewegung in beide Lenkrichtungen ist ein aus einem elastischen Material gebildetes Anschlagelement vorgesehen,
• das Anschlagelement (1) ist am Außenumfang mit wenigstens einem Rasterelement
(12) versehen und das Gehäuse (3) weist entsprechende Rücksprünge (13) zur Aufnahme des Rasterelements (12) auf, **dadurch gekennzeichnet, dass**
• zwischen den beiden axialen Enden des jeweiligen Anschlagelementes (1) wenigstens ein Stabilisierungselement (9) eingebracht ist, welches das Anschlagelement (1) in jeweils voneinander getrennte Dämpfungsbereiche (10) unterteilt.

2. Lenkeinrichtung nach Anspruch 1, **dadurch gekennzeichnet, dass** das Rasterelement (12) um den Außenumfang des Anschlagelementes (1) umlaufend ausgebildet ist.

3. Lenkeinrichtung nach Anspruch 1 oder 2, **dadurch gekennzeichnet, dass** das Anschlagelement (1) an einem oder beiden axialen Enden mit einem Metallring (11a,11b) versehen ist.

4. Lenkeinrichtung nach Anspruch 1, **dadurch gekennzeichnet, dass** das Stabilisierungselement (9) axial beidseits von dem elastischen Material (8) umgeben ist.

5. Lenkeinrichtung nach Anspruch 4, **dadurch gekennzeichnet, dass** das Stabilisierungselement (9) das elastische Material (8) in zwei in axialer Richtung wenigstens annähernd gleich große Dämpfungsbereiche (10) unterteilt.

6. Lenkeinrichtung nach einem der Ansprüche 4 bis 5, **dadurch gekennzeichnet, dass** das Stabilisierungselement (9) aus einem nicht elastischen Material oder einem Material mit einer geringen Elastizität gebildet ist.

7. Lenkeinrichtung nach einem der Ansprüche 4 bis 6, **dadurch gekennzeichnet, dass** das Stabilisierungselement als Metallring (9) ausgebildet ist.

8. Lenkeinrichtung nach Anspruch 7, **dadurch gekennzeichnet, dass** der Metallring als Stahlring (9) ausgebildet ist.

9. Lenkeinrichtung nach einem der Ansprüche 1 bis 8, **dadurch gekennzeichnet, dass** das elastische Material (8) ein Elastomer ist.

10. Lenkeinrichtung nach einem der Ansprüche 1 bis 9, **dadurch gekennzeichnet, dass** die Dämpfungsbereiche (10) jeweils eine axiale Länge von 4 bis 14 Millimeter, vorzugsweise 9 Millimeter, aufweisen.

11. Lenkeinrichtung nach einem der Ansprüche 1 bis 10, **dadurch gekennzeichnet, dass** das Stabilisierungselement (9) eine axiale Länge von weniger als 3 Millimeter, vorzugsweise 2 Millimeter, aufweist.

## Claims

1. Steering device for a motor vehicle, having a steering rod which is connected to steerable wheels, having the following features:
• the steering rod is arranged axially displaceably in a housing,
• a stop element which is formed from an elastic material is provided for limiting the axial movement in both steering directions,
• the stop element (1) is provided with at least one latch element (12) on the outer circumference and the housing (3) has corresponding recesses (13) for receiving the latch element (12), **characterized in that**
• at least one stabilizing element (9) which divides the stop element (1) into damping regions (10) which are separated in each case from one another is introduced between the two axial ends of the respective stop element (1).

2. Steering device according to Claim 1, **characterized in that** the latch element (12) is configured so as to be circumferential around the outer circumference of the stop element (1).

3. Steering device according to Claim 1 or 2, **characterized in that** the stop element (1) is provided with a metal ring (11a, 11b) at one or both axial ends.

4. Steering device according to Claim 1, **characterized in that** the stabilizing element (9) is surrounded axially on both sides by the elastic material (8).

5. Steering device according to Claim 4, **characterized in that** the stabilizing element (9) divides the elastic material (8) into two damping regions (10) which are of at least approximately identical size in the axial direction.

6. Steering device according to either of Claims 4 and 5, **characterized in that** the stabilizing element (9) is formed from a non-elastic material or a material with a low elasticity.

7. Steering device according to one of Claims 4 to 6, **characterized in that** the stabilizing element is configured as a metal ring (9).

8. Steering device according to Claim 7, **characterized in that** the metal ring is configured as a steel ring (9).

9. Steering device according to one of Claims 1 to 8, **characterized in that** the elastic material (8) is an elastomer.

10. Steering device according to one of Claims 1 to 9, **characterized in that** the damping regions (10) have in each case an axial length of from 4 to 14 millimetres, preferably 9 millimetres.

11. Steering device according to one of Claims 1 to 10, **characterized in that** the stabilizing element (9) has an axial length of less than 3 millimetres, preferably 2 millimetres.

## Revendications

1. Dispositif de direction pour un véhicule automobile, comprenant une barre de direction, qui est connectée à des roues directrices, comprenant les caractéristiques suivantes :
- la barre de direction est disposée de manière déplaçable axialement dans un boîtier,
- en vue de limiter le déplacement axial dans les deux sens de direction, on prévoit un élément de butée formé d'un matériau élastique,
- l'élément de butée (1) est pourvu sur sa périphérie extérieure d'au moins un élément de verrouillage (12) et le boîtier (3) présente des retraits correspondants (13) pour recevoir l'élément de verrouillage (12),
**caractérisé en ce que**
- l'on introduit entre les deux extrémités axiales de l'élément de butée respectif (1) au moins un élément de stabilisation (9) qui divise l'élément de butée (1) en régions d'amortissement (10) à chaque fois séparées les unes des autres.

2. Dispositif de direction selon la revendication 1, **caractérisé en ce que** l'élément de verrouillage (12) est réalisé de manière circonférentielle autour de la périphérie extérieure de l'élément de butée (1).

3. Dispositif de direction selon la revendication 1 ou 2, **caractérisé en ce que** l'élément de butée (1) est pourvu à une ou aux deux extrémités axiales d'une bague métallique (11a, 11b).

4. Dispositif de direction selon la revendication 1, **caractérisé en ce que** l'élément de stabilisation (9) est entouré axialement des deux côtés par le matériau élastique (8).

5. Dispositif de direction selon la revendication 4, **caractérisé en ce que** l'élément de stabilisation (9) divise le matériau élastique (8) en deux régions d'amortissement (10) au moins approximativement de même taille dans la direction axiale.

6. Dispositif de direction selon l'une quelconque des revendications 4 à 5, **caractérisé en ce que** l'élément de stabilisation (9) est formé d'un matériau non élastique ou d'un matériau ayant une faible élasticité.

7. Dispositif de direction selon l'une quelconque des revendications 4 à 6, **caractérisé en ce que** l'élément de stabilisation est réalisé sous forme de bague métallique (9).

8. Dispositif de direction selon la revendication 7, **caractérisé en ce que** la bague métallique est réalisée sous forme de bague en acier (9).

9. Dispositif de direction selon l'une quelconque des revendications 1 à 8, **caractérisé en ce que** le matériau élastique (8) est un élastomère.

10. Dispositif de direction selon l'une quelconque des revendications 1 à 9, **caractérisé en ce que** les régions d'amortissement (10) présentent à chaque fois une longueur axiale de 4 à 14 millimètres, de préférence de 9 millimètres.

11. Dispositif de direction selon l'une quelconque des revendications 1 à 10, **caractérisé en ce que** l'élément de stabilisation (9) présente une longueur axiale de moins de 3 millimètres, de préférence de 2 millimètres.
